# EUROPEAN PATENT SPECIFICATION

(11) **EP 3 763 204 B1**
(45) Date of publication and mention of the grant of the patent: **17.07.2024**
(21) Application number: 18908715.8
(22) Date of filing: 20.12.2018
(51) Int. Cl.: B01D 46/00, B01D 46/12, A01K 1/03

(54) **APPARATUS FOR BREEDING LABORATORY ANIMAL**
VORRICHTUNG ZUM ZÜCHTEN VON VERSUCHSTIEREN
APPAREIL POUR L'ÉLEVAGE D'UN ANIMAL DE LABORATOIRE

(30) Priority: 09.03.2018 KR 20180027977
(43) Date of publication of application: 13.01.2021
(73) Proprietor: Orient Inc., Seongnam-si, Gyeonggi-do 13201 (KR)
(72) Inventor: JANG, Jae-Jin, Seoul 02823 (KR)
(74) Representative: Ström & Gulliksson AB
(86) International application number: PCT/KR2018/016327
(87) International publication number: WO 2019/172511

(56) References cited:
- EP-B1- 1 719 406
- JP-A- 2007 044 122
- KR-A- 20160 074 759
- KR-A- 20170 030 377
- KR-B1- 101 302 330
- KR-U- 20070 000 302
- US-A1- 2007 193 527
- US-A1- 2016 174 519
- US-B1- 6 588 373

## Description

### [Technical Field]

The present disclosure relates to an apparatus for breeding a laboratory animal.

### [Background Art]

An apparatus for breeding a laboratory animal may be an apparatus for breeding laboratory animals such as laboratory mice or the like.

The apparatus for breeding a laboratory animal may be provided with a filter unit for filtering air such that the air in a breeding space is suitable for breeding the laboratory animal.

However, since it may be inconvenient to replace a filter in such a filter unit, and, when the apparatus is used, the filter may not able to be stably disposed of, to be easily separated and to be removed from a predetermined position, there is a possibility that a gap in which air is introduced into the breeding space, without passing through the filter, may be generated. US6588373B and US2016174519 disclose prior art apparatuses.

### [Disclosure]

### [Technical Problem]

The present disclosure was devised to solve the above problems, and an object of the present disclosure is to provide an apparatus for breeding a laboratory animal in which a filter may be easily replaced and may be stably disposed.

### [Technical Solution]

The invention is as defined in claim 1.

### [Advantageous Effects]

According to an aspect of the present disclosure, an apparatus for breeding a laboratory animal may be configured such that a filter is replaced after an upper panel rotates in an upward direction in a state in which a lower panel is fixed to an opening of an apparatus main body, to quickly and easily replace the filter between the lower panel and the upper panel, and to stably and reliably dispose and fix the filter, to have effects of preventing separation of the filter and generation of a gap into which contaminated air may be introduced.

In addition, according to an aspect of the present disclosure, an apparatus for breeding a laboratory animal may be configured such that a temperature display sticker is attached to an external surface of an apparatus main body, to have advantages, such that a user may use the temperature display sticker to easily determine a temperature of a breeding space.

In addition, according to an aspect of the present disclosure, an apparatus for breeding a laboratory animal may be configured such that a cover is formed of a material changing color, depending on a temperature, to have advantages, such that a user may determine whether it has been sterilized at a proper sterilization temperature in a sterilization apparatus.

In addition, according to an aspect of the present disclosure, an apparatus for breeding a laboratory animal may have advantages that the laboratory animal may be easily inserted or removed, the apparatus may be easily connected to an air conditioner, and the apparatus may be fastened to feeders having various shapes.

### [Description of Drawings]

FIG. 1 is a perspective view illustrating an apparatus for breeding a laboratory animal according to the present disclosure.
FIG. 2 is a view illustrating the filter unit being rotated in the apparatus of FIG. 1.
FIG. 3 is a view illustrating the filter unit of FIG. 2 being open and the filter being separated therefrom.
FIG. 4 is a view illustrating the feeder being separated from the apparatus of FIG. 3.
FIG. 5 is a view illustrating the cover and the feeder being separated from the apparatus main body in the apparatus of FIG. 1.
FIG. 6 is an enlarged view illustrating the filter unit of FIG. 3.
FIG. 7 is an exploded perspective view illustrating the filter unit of FIG. 6.
FIG. 8 is a view illustrating the upper panel being rotated in the filter unit of FIG. 3.
FIG. 9 is a view illustrating the gasket being separated from the filter unit of FIG. 6.
FIG. 10 is a view illustrating a hinge-fastened portion of the opening and the filter unit in the apparatus of FIG. 1.
FIG. 11 is an exploded perspective view of a valve unit of an apparatus for breeding a laboratory animal.
FIGS. 12 and 13 are portions of cross-sectional views taken along line A-A' of FIG. 1, and views illustrating the connection portion of the air conditioner being connected to the flow hole formed in the cover.
FIGS. 14 and 15 are portions of cross-sectional views taken along line B-B' of FIG. 1, and views illustrating the water bottle being inserted into the water supply unit formed in the cover.

### [Best Mode for Invention]

Hereinafter, it will be described in detail through example drawings of the present disclosure. Note that when adding reference numerals to the components of each of the drawings, the same components have the same reference numerals as possible even though they are displayed on different drawings. In addition, in describing the present disclosure, when it is determined that detailed descriptions of related well-known configurations or functions may obscure the subject matter of the present disclosure, detailed descriptions thereof will be omitted.

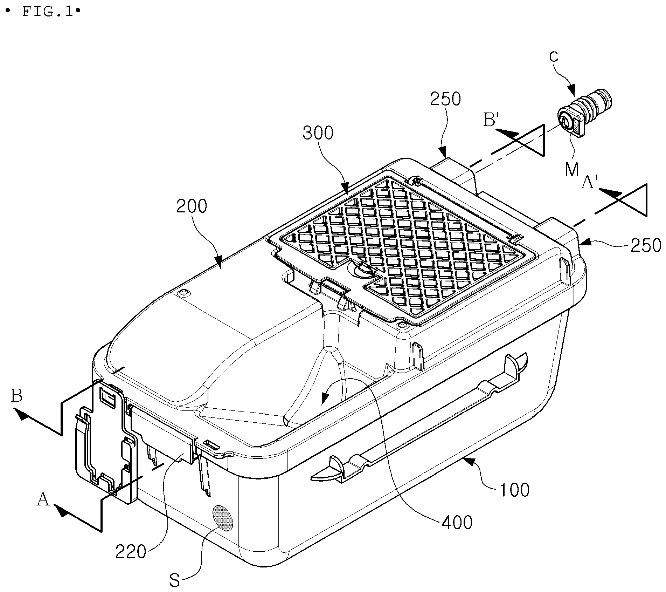

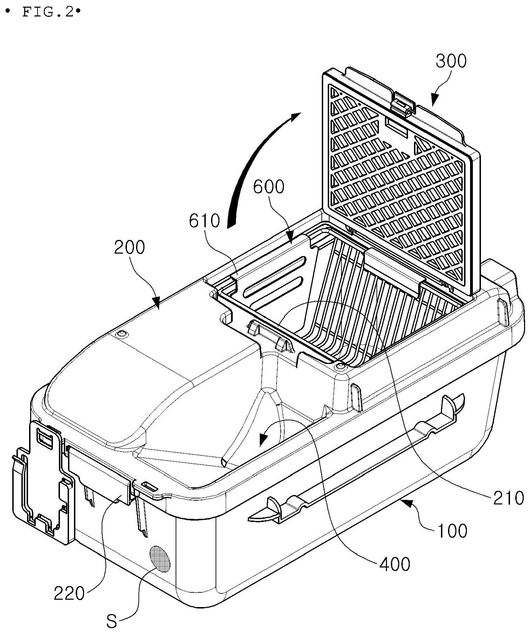

FIG. 1 is a perspective view illustrating an apparatus for breeding a laboratory animal according to the present disclosure, and FIG. 2 is a view illustrating the filter unit being rotated in the apparatus of FIG. 1.

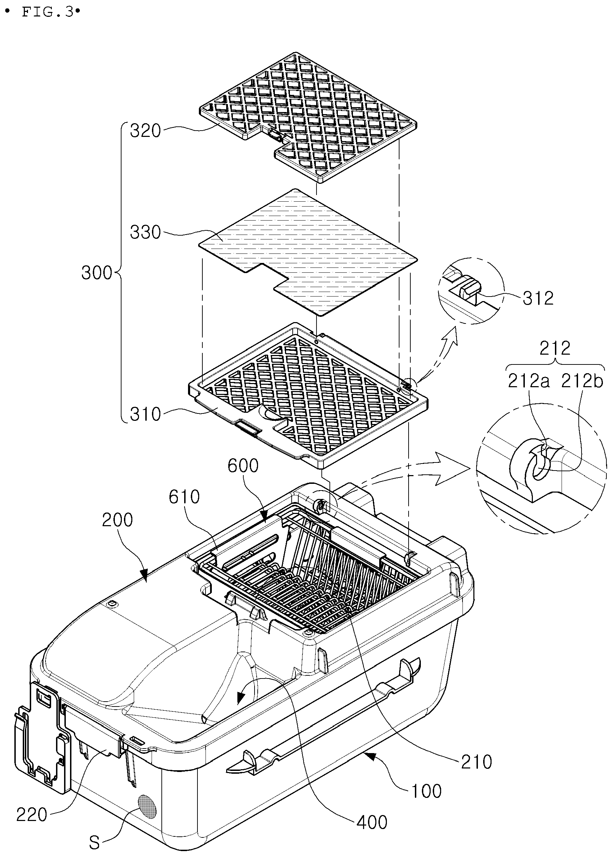

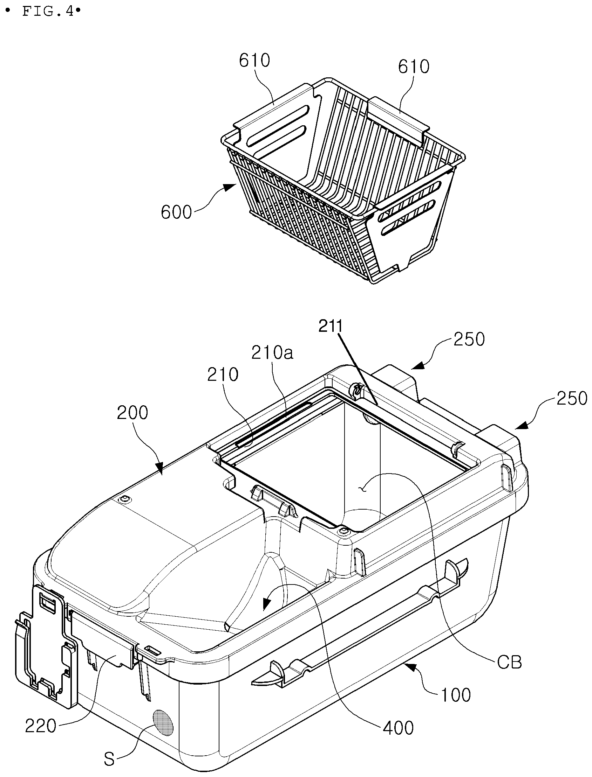

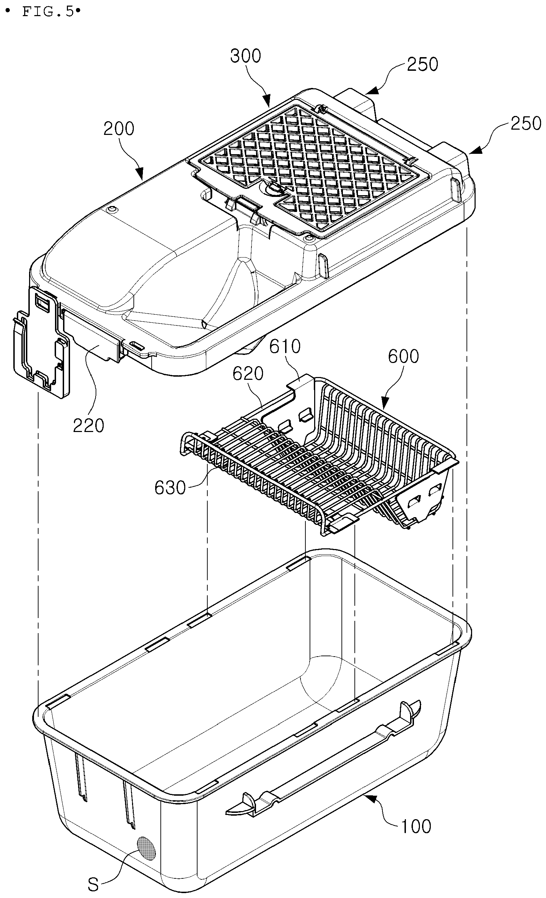

In addition, FIG. 3 is a view illustrating the filter unit of FIG. 2 being open and the filter being separated therefrom, FIG. 4 is a view illustrating the feeder being separated from the apparatus of FIG. 3, and FIG. 5 is a view illustrating the cover and the feeder being separated from the apparatus main body in the apparatus of FIG. 1.

Referring to the drawings, an apparatus for breeding a laboratory animal according to the present invention includes an apparatus main body 100, a cover 200, and a filter unit 300.

In this case, a breeding space CB in which the laboratory animal is bred is formed in the apparatus main body 100.

The apparatus main body 100 may be configured to have a box shape as illustrated in the drawings, but is not limited thereto, and any shape may be taken, when an appropriate breeding space is implemented enough to breed the laboratory animal.

The cover 200 is configured to have an opening 210 formed on one side of the cover, and covers an open upper portion of the apparatus main body 100.

Therefore, the apparatus main body 100 may have a structure in which the breeding space CB communicates with an external space through the opening 210 of the cover 200.

The filter unit 300 is configured to be attachable to and detachable from the opening 210 of the cover 200, and to purify air flowing into the breeding space CB.

The filter unit 300 includes a lower panel 310, an upper panel 320, and a filter 330.

In this case, the lower panel 310 is rotatably provided in the opening 210, and has a mesh structure to allow air to pass through.

In addition, the upper panel 320 is rotatably provided on an upper portion of the lower panel 310, and has a mesh structure to allow air to pass through.

In addition, the filter 330 is interposed between, and fixed to, the lower panel 310 and the upper panel 320. For example, the lower panel 310 and the upper panel 320 may serve to support the filter 330 in a vertical direction, e.g., in upward and downward directions, to position the filter 330 in the opening 210 of the cover 200.

In the filter unit 300 configured as described above, the filter 330 may be replaced after the upper panel 320 rotates in the upward direction in a state in which the lower panel 310 is fixed to the opening 210 of the apparatus main body 100, to quickly and easily replace the filter 330 between the lower panel 310 and the upper panel 320.

For example, as a user may rotate the upper panel 320 in the upward direction with his/her one hand while pressing the lower panel 310 with the other hand, to safely and easily replace the filter 330.

Furthermore, in the filter unit 300 of the present disclosure, due to the above-described configuration, as the filter 330 may be stably and reliably arranged and fixed, problems such as separation of the filter 330 and inflow of contaminated air, as described below, may be prevented.

In particular, unlike the above-described configuration of the filter unit 300 of the present disclosure, when the lower panel 310 of the filter unit 300 takes a configuration that may be rotated in the downward direction while being introduced into a lower groove of the upper panel 320, the following problems may occur.

As an example, in a process of handling the apparatus for breeding a laboratory animal by the user, when the upper panel 320 is pressed to release the lower panel 310 from the upper panel 320, the lower panel 310 may be rotated in the downward direction to move the filter 330 into the breeding space CB of the apparatus main body 100 in the downward direction.

In addition, in the above case, even when the lower panel 310 is not completely rotated, but slightly rotated, a gap between the upper panel 320 and the filter 330 may occur. Therefore, since air flowing through the upper panel 320 from the external space may be introduced into the breeding space CB without passing through the filter 330, external bacteria may be introduced into the breeding space CB.

Practically, the breeding space CB may be maintained at a positive pressure by injecting clean air to prevent external bacteria from entering the breeding space CB. As in the case above, when the lower panel 310 is released from the upper panel 320, a gap between the upper panel 320 and the lower panel 310 may gradually increase due to the positive pressure, and as the lower panel 310 gradually rotates in the downward direction, the contaminated air may be introduced into the breeding space CB, without passing through the filter 330.

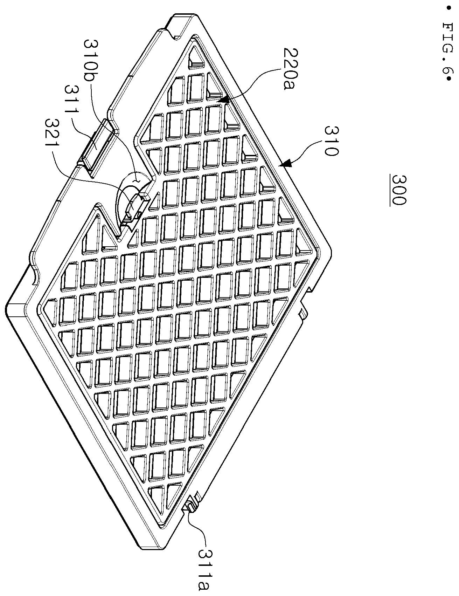

The filter unit 300 will be described in detail with reference to FIGS. 6 to 10.

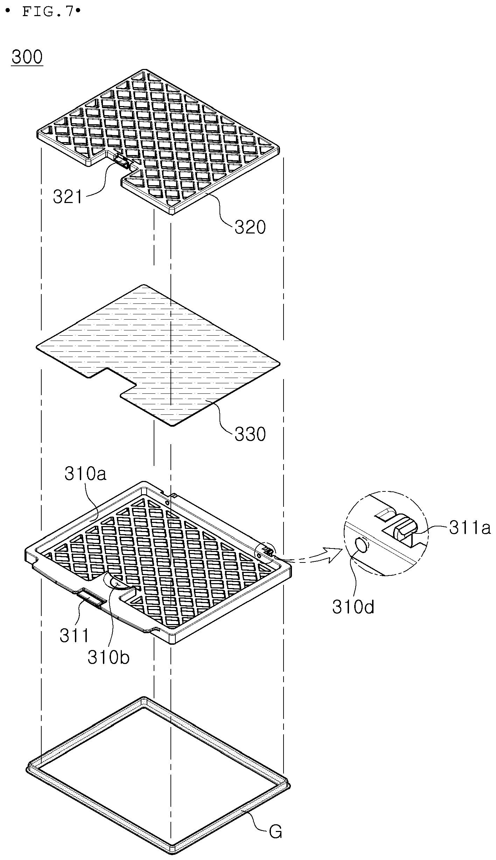

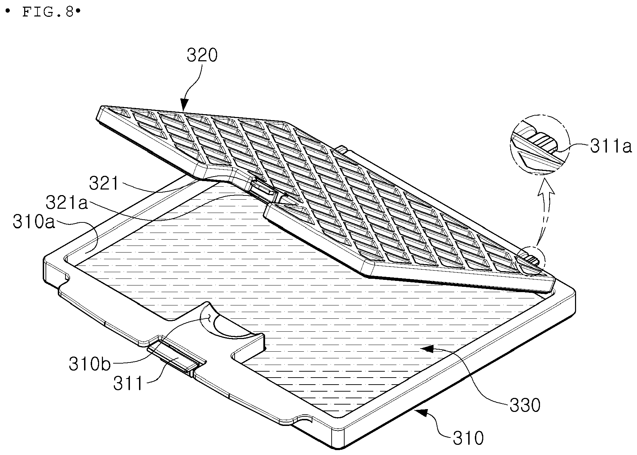

FIG. 6 is an enlarged view illustrating the filter unit of FIG. 3, FIG. 7 is an exploded perspective view illustrating the filter unit of FIG. 6, and FIG. 8 is a view illustrating the upper panel being rotated in the filter unit of FIG. 3.

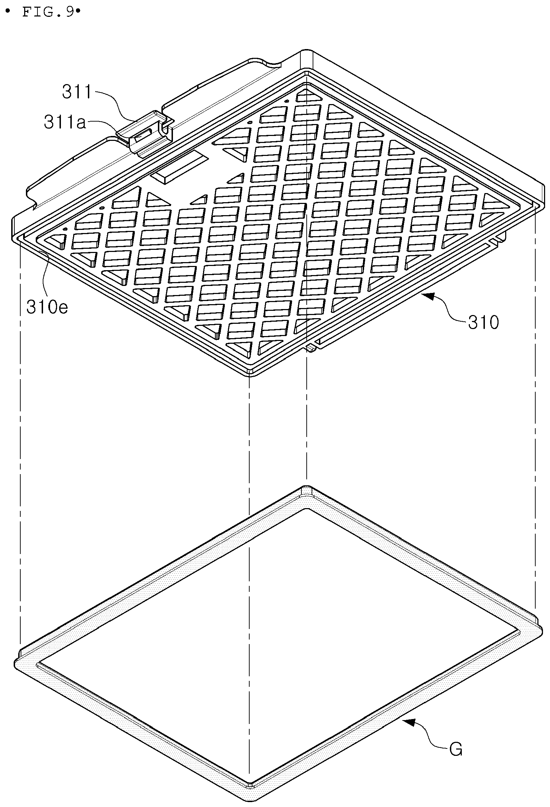

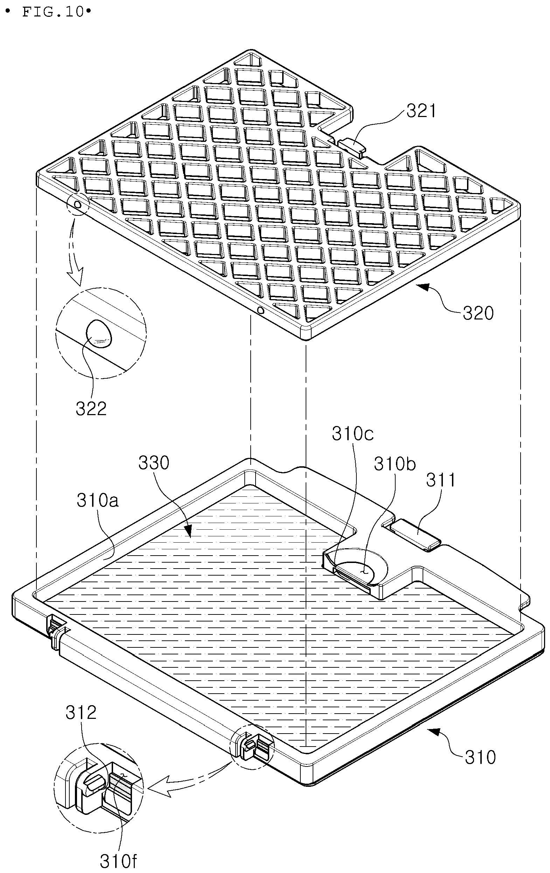

In addition, FIG. 9 is a view illustrating the gasket being separated from the filter unit of FIG. 6, and FIG. 10 is a view illustrating a hinge-fastened portion of the opening and the filter unit in the apparatus of FIG. 1.

Referring to the drawings, the upper portion of the lower panel 310 has a panel recess 310a into which the upper panel 320 is inserted.

In addition, one side portion of the upper panel 320 is hinge-fastened to one side portion of the panel recess 310a, and the other side portion of the upper panel 320 is latch-fastened to the other side portion of the panel recess 310a.

In this case, a configuration in which the other side portion of the upper panel 320 is latch-fastened to the other side portion of the panel recess 310a may be described in detail, as follows.

A first pressing member 321, which is elastically deformable, may be formed on the other side portion of the upper panel 320, and a first latching protrusion line 321a may be formed in the first pressing member 321.

In addition, a first operating groove 310b, open in the upward direction, may be formed on the other side surface of the panel recess 310a of the lower panel 310. In addition, a first latching groove line 310c by which the first latching protrusion line 321a is inserted into and latched is formed below the first operating groove 310b.

In a process in which the other side portion of the upper panel 320 is latch-fastened to the other side portion of the panel recess 310a of the lower panel 310 by such a configuration, when the user presses the other side portion of the upper panel 320 in a direction facing the other side portion of the panel recess 310a of the lower panel 310, the first pressing member 321 of the upper panel 320 may be pushed and pressed in the downward direction by the other side portion of the panel recess 310a. Thereafter, when the first latching protrusion line 321a of the first pressing member 321 is lowered to the first latching groove line 310c, a state of the first pressing member 321 pressed by the elastic force may be recovered again to be introduced into the first latching groove line 310c. Therefore, the other side portion of the upper panel 320 may be latch-fastened to the other side portion of the panel recess 310a.

In a process in which the other side portion of the upper panel 320 is released from the other side portion of the panel recess 310a of the lower panel 310, when the user puts a finger into the first operating groove 310b and pushes the first pressing member 321 in the upward direction while pressing the first pressing member 321, the first latching protrusion line 321a of the first pressing member 321 may come out of the first latching groove line 310c. Therefore, the other side portion of the upper panel 320 may be released from the other side portion of the panel recess 310a.

As described above, in the process in which the other side portion of the upper panel 320 is latch-fastened to the other side portion of the panel recess 310a, the one side portion of the upper panel 320 may be hinge-fastened to the one side portion of the panel recess 310a, to insert the upper panel 320 into the panel recess 310a of the lower panel 310 and assemble them.

Then, the configuration in which the one side portion of the upper panel 320 is hinge-fastened to the one side portion of the panel recess 310a may be described in detail, as follows.

A first hinge tongue 420 may be formed on one side surface of the upper panel 320.

In addition, a first hinge groove 310d into which the first hinge tongue 420 is inserted may be formed on one side surface of the panel recess 310a of the lower panel 310.

Therefore, when the one side surface of the upper panel 320 is pushed toward the one side surface of the panel recess 310a, to insert the first hinge tongue 420 into the first hinge groove 310d, the one side portion of the upper panel 320 may be fastened to the one side portion of the panel recess 310a.

In order to rotate the one side portion of the upper panel 320 fastened to the one side portion of the panel recess 310a as described above, for example, in order to achieve a hinge-fastened state with the one side portion of the panel recess 310a, the first hinge groove 310d may be configured that a diameter of the first hinge groove 310d is longer than a diameter of a longitudinal cross-section of the first hinge tongue 420, to form a concave shape.

Therefore, the first hinge tongue 420 may be inserted into the first hinge groove 310d, and may be then rotatable to a certain degree in the vertical direction, to rotate the one side portion of the upper panel 320 in a state in which the side portion of the upper panel 320 is fastened to the one side portion of the panel recess 310a.

In this case, in order for the one side portion of the upper panel 320 to rotate more smoothly with respect to the one side portion of the panel recess 310a, the first hinge tongue 420 may protrude in a direction connecting from the one side portion of the upper panel 320 to the other side portion of the upper panel 320, to form a hemispherical structure.

For reference, the hemispherical structure in the present specification may refer to an entire shape of the first hinge tongue 420, or may be a bar-shape in which the first hinge tongue 420 protrudes shortly and extends as illustrated in the drawings, and may include structures in which an end portion of the bar-shape has a hemispherical shape.

A gasket groove 310e is formed along an edge of a lower surface of the lower panel 310, and an elastic gasket G is inserted into the gasket groove 310e.

When a gasket has a structure in which the gasket is melted in and fastened to the lower panel 310, it is impossible to replace the gasket from the lower panel 310. Therefore, since the gasket should be replaced together with the lower panel 310, the process relating thereto may be inefficient in terms of costs.

According to the present disclosure, as the elastic gasket G is elastically compressed, and is inserted into and fastened to the gasket groove 310e, the elastic gasket G may be released from the gasket groove 310e, to allow the elastic gasket G to be replaced.

Furthermore, a gasket separation groove 310f in communication with the gasket groove 310e is formed on the one side portion of the lower panel 310 to expose one side portion of the gasket groove 310e.

Therefore, the elastic gasket G may be easily released and replaced from the gasket groove 310e by inserting a pointed end portion of a member such as a ballpoint pen into the gasket separation groove 310f, to push the elastic gasket G in the downward direction.

For reference, the elastic gasket G may have an inverted T-shape and may have a structure in which only an upper portion of the elastic gasket G is inserted into the gasket groove 310e and the lower portion of the elastic gasket G is not inserted into the gasket groove 310e. When the user determines and pulls the lower portion of the elastic gasket G, the elastic gasket G may be easily released from the gasket groove 310e.

Furthermore, when the elastic gasket G is inserted into and placed in the gasket groove 310e, the elastic gasket G may be configured to be slightly spaced from an internal upper surface of the gasket groove 310e. An end portion of a member such as a ballpoint pen may be inserted between the elastic gasket G and the internal upper surface of the gasket groove 310e in the gasket separation groove 310f to push the elastic gasket G in the downward direction, to more easily release the elastic gasket G from the gasket groove 310e.

A configuration in which the filter unit 300 configured as described above is installed in the cover 200 will be described.

An edge groove 211 into which the lower panel 310 is inserted is formed in an edge of the opening 210.

In addition, the one side portion of the lower panel 310 is hinge-fastened to one side portion of the edge groove 211, and the other side portion of the lower panel 310 is latch-fastened to the other side portion of the edge groove 211.

In this case, a configuration in which the other side portion of the lower panel 310 is latch-fastened to the other side portion of the edge groove 211 may be described in detail, as follows.

A second pressing member 311, which is elastically deformable, may be formed in the other side portion of the lower panel 310, and a second latching protrusion line 311a may be formed in the second pressing member 311.

In addition, a second operating groove, open in the upward direction, may be formed on the other side portion of the edge groove 211 of the opening 210, and a second latching groove line by which the second latching protrusion line 311a is inserted and latched is formed below the second operating groove.

In this case, when the other side portion of the lower panel 310 is latch-fastened to the other side portion of the edge groove 211 of the opening 210, a process of introducing the second latching protrusion line 311a of the second pressing member 311 into the second latching groove line may be similar to the process in which the first latching protrusion line 321a of the first pressing member 321 described above is introduced into the first latching groove line 310c, and a detailed description thereof will thus be omitted.

As described above, in the process in which the other side portion of the lower panel 310 is latch-fastened to the other side portion of the edge groove 211, the one side portion of the lower panel 310 is hinge-fastened to the one side portion of the edge groove 211, to insert the lower panel 310 into the edge groove 211 and assemble them.

Subsequently, the configuration in which the one side portion of the lower panel 310 is hinge-fastened to the one side portion of the edge groove 211 may be described in detail, as follows.

A hinge protrusion is formed on the one side surface of the lower panel 310, and second hinge tongues 312 are formed on both side surfaces of the hinge protrusion.

In addition, an assembly groove in which the hinge protrusion is inserted is formed in the one side portion of the edge groove 211 of the opening 210, and second hinge grooves 212 in which the second hinge tongues 312 are inserted is formed on both side surfaces of the assembly groove.

Therefore, when the second hinge tongues 312 of the lower panel 310 are inserted into the second hinge grooves 212 of the assembly groove, the one side portion of the lower panel 310 is hinge-fastened to the one side portion of the edge groove 211.

In addition to the hinge-fastening of the lower panel 310 to the opening 210, in order to detach the lower panel 310 from the opening 210, the second hinge tongues 312 and the second hinge grooves 212 have the following specific configuration.

The second hinge tongues 312 protrude in a direction connecting the one side portion and the other side portion of the lower panel 310.

In addition, each of the second hinge grooves 212 includes a groove entrance portion 212a and a groove extension portion 212b.

In this case, the groove entrance portion 212a opens in an upward direction and is formed in a longitudinal direction oriented vertically, to introduce the second hinge tongues 312 into a longitudinal arrangement.

In addition, the groove extension portion 212b is connected to a lower portion of the groove entrance portion 212a and further extend from the longitudinal arrangement to a transverse arrangement, as compared to the groove entrance portion 212a, to allow rotation of each of the second hinge tongues 312.

As above, when the lower panel 310 is disposed in the longitudinal direction and moves in the downward direction, the second hinge tongues 312 may also move in the longitudinal arrangement, to be introduced into the groove entrance portion 212a of each of the second hinge grooves 212. Thereafter, when the second hinge tongues 312 are rotated in a transverse arrangement in a state in which the second hinge tongues 312 pass through the groove entrance portion 212a of each of the second hinge grooves 212, the second hinge tongues 312 may not escape in a direction facing the groove entrance portion 212a.

As above, at the same time that the one side portion of the lower panel 310 is fastened to the one side portion of the opening 210, a rotatable configuration, which is a hinge structure, may be formed.

In order to release the one side portion of the lower panel 310 from the one side portion of the opening 210, the above-described process in which the second hinge tongues 312 are introduced into the second hinge grooves 212 may be performed in a reverse order.

Furthermore, each of the second hinge tongues 312 may be formed to have a tapered structure in a direction protruding from the both side surfaces of the hinge protrusion.

As an example, as illustrated in the drawings, a shape of each of the second hinge tongues 312 in a state in which the lower panel 310 is disposed in the longitudinal direction, may be a triangular shape protruding sharply in a lateral direction of the lower panel 310, when viewed in plan view.

Due to the shape of each of the second hinge tongues 312, when the second hinge tongues 312 of the lower panel 310 are introduced into the second hinge grooves 212 of the cover 200, the introduction may be smoothly and easily performed, and when each of the second hinge tongues 312 is rotated inside each of the second hinge grooves 212, rotation may be smoothly and easily performed.

For example, the tapered structure of each of the second hinge tongues 312 may minimize interference or friction of each of the second hinge tongues 312 with an internal surface of each of the second hinge grooves 212, in a process in which the second hinge tongues 312 are introduced into the second hinge grooves 212 and the second hinge tongues 312 are rotated in the second hinge grooves 212. Therefore, the introduction and rotation of each of the second hinge tongues 312 with regard to each of the second hinge grooves 212 may be smoothly and stably performed.

A temperature display sticker S may be attached to an external surface of the apparatus main body 100.

A laboratory animal may be bred in the breeding space CB formed in the apparatus main body 100. In order to keep the laboratory animal in a healthy state, a control in temperature suitable for breeding the laboratory animal may be essential.

As above, a temperature of the breeding space CB may be adjusted. Since the breeding space CB may be formed in the apparatus main body 100, it may be difficult to access from the external space. Therefore, it may be difficult for the user to know the temperature of the breeding space CB in real time.

The present disclosure may be configured by attaching the temperature display sticker S to the external surface of the apparatus main body 100, such that the user may know the temperature of the apparatus main body 100 with the temperature display sticker S, wherein, since a temperature of the apparatus main body 100 may be almost the same as a temperature of the breeding space CB, the user may eventually easily determine the temperature of the breeding space CB.

For reference, the temperature display sticker S is not limited by the present disclosure, and any conventional temperature display sticker may be utilized.

In addition, a clamping member 220 to be rotated may be mounted on the cover 200, and a latching jaw for latching the clamping member 220 may be formed on the apparatus main body 100, wherein the clamping member 220 may be formed of a material changing color, depending on a temperature.

Before the laboratory animal is inserted into the breeding space CB, the apparatus for breeding a laboratory animal may be sterilized at a proper sterilization temperature of about 121 degrees, and whether the sterilization has been performed at such a temperature may be checked by the clamping member 220 having the above-described material.

In particular, a sterilization temperature in a sterilization apparatus may be controlled through a temperature controller of the sterilization apparatus. In order for the user to confirm whether the apparatus for breeding a laboratory animal has actually sterilized at such a sterilization temperature, it may be checked through the color of the clamping member 220, as soon as the apparatus for breeding a laboratory animal may be removed from the sterilization apparatus.

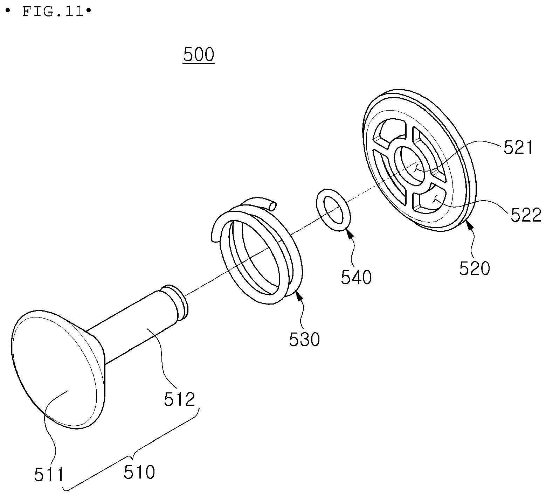

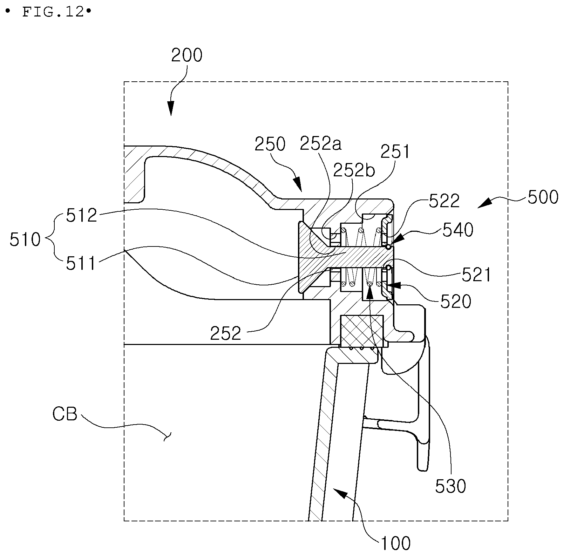

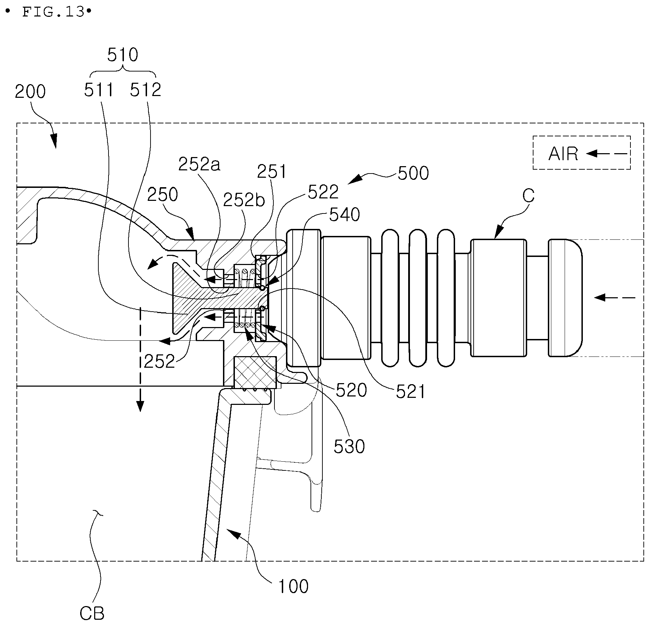

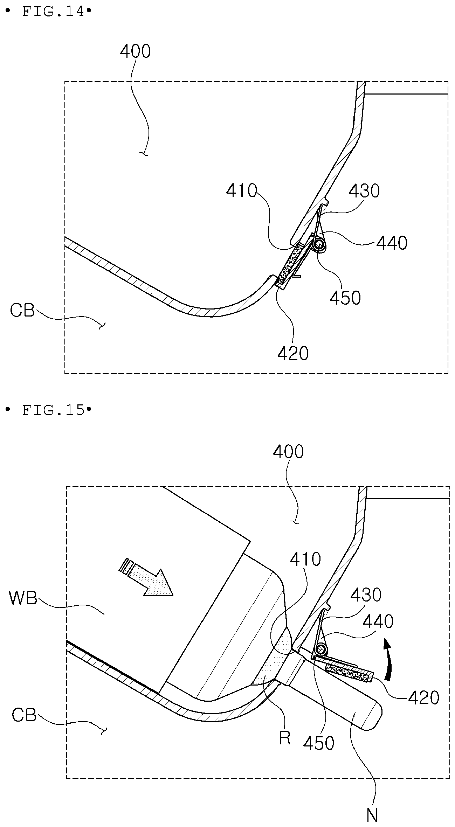

FIG. 11 is an exploded perspective view of a valve unit of an apparatus for breeding a laboratory animal, FIGS. 12 and 13 are portions of cross-sectional views taken along line A-A' of FIG. 1, and views illustrating the connection portion of the air conditioner being connected to the flow hole formed in the cover, and FIGS. 14 and 15 are portions of cross-sectional views taken along line B-B' of FIG. 1, and views illustrating the water bottle being inserted into the water supply unit formed in the cover.

Referring to the drawings, an air flow unit 250 may be formed in the cover 200.

The air flow unit 250 may be connected to an air supply source (not illustrated) or an air discharge source (not illustrated).

As illustrated in FIG. 1, two (2) air flow units 250 may be formed in the cover 200. In addition, one (1) air flow unit 250 may be connected to an air supply source. In addition, the other air flow unit 250 may be connected to an air discharge source.

Fresh air from the air supply source may be introduced into the air flow unit 250 connected to the air supply source. Therefore, fresh air may be supplied to the breeding space CB of the apparatus main body 100.

In addition, contaminated air, which may be present by mixing carbon dioxide, etc. generated by breathing of an laboratory animal in the breeding space CB, may be introduced into the air flow unit 250 connected to the air discharge source. In addition, the contaminated air introduced into the air flow unit 250 may be discharged through the air flow unit 250 to the air discharge source.

Therefore, air may be circulated in the breeding space CB of the apparatus main body 100 to breed the laboratory animal in a comfortable environment.

Referring to FIGS. 12 and 13, a flow hole 251 may be formed in the air flow unit 250. Further, a valve unit 500 for opening and closing the flow hole 251 may be provided in the flow hole 251 of the air flow unit 250.

The valve unit 500 may include a movable opening and closing member 510. The movable opening and closing member 510 may be provided to be movable in the flow hole 251 to open and close the flow hole 251.

The movable opening and closing member 510 may include an opening and closing portion 511 and a moving portion 512. The opening and closing portion 511 may open and close the flow hole 251. In addition, the opening and closing portion 511 may have a truncated conical shape or a conical shape. Therefore, the movable opening and closing member 510 may easily open and close the flow hole 251 of the air flow unit 250.

The moving portion 512 of the movable opening and closing member 510 may be provided to be movable to the flow hole 251.

A guide portion 252 may be provided in the flow hole 251 as illustrated in FIGS. 12 and 13. A guide hole 252a and an air passage hole 252b may be formed in the guide portion 252.

The movable opening and closing member 510, described above, for example, the moving portion 512 of the movable opening and closing member 510 may be inserted into the guide hole 252a. Therefore, movement of the movable opening and closing member 510 in the flow hole 251 may be guided.

In addition, air may pass through the air passage hole 252b. Therefore, when the flow hole 251 of the air flow unit 250 is open by the movable opening and closing member 510, air supplied from the air supply source to the flow hole 251 may pass through the air passage hole 252b of the guide portion 252 to be introduced into the breeding space CB of the apparatus main body 100, as illustrated in FIG. 13, or contaminated air of the breeding space CB may be introduced into the flow hole 251 and may then pass through the air passage hole 252b of the guide portion 252, to be discharged to the air discharge source.

The valve unit 500 may further include a guide member 520 and an elastic member 530, in addition to the movable opening and closing member 510, described above.

An assembly hole 521 and an air passage hole 522 may be formed in the guide member 520.

One end portion of the movable opening and closing member 510, for example, one end portion of the moving portion 512 of the movable opening and closing member 510 may be interposed on the assembly hole 521 of the guide member 520. For example, the one end portion of the movable opening and closing member 510 may be interposed into and assembled with the assembly hole 521 by an interposing auxiliary member 540.

Therefore, the guide member 520 may move the flow hole 251 of the air flow unit 250 together with the movable opening and closing member 510, according to a movement of the movable opening and closing member 510.

Air may pass through the air passage hole 522 of the guide member 520. Therefore, when the flow hole 251 is open by the movable opening and closing member 510, air supplied from the air supply source to the flow hole 251 may pass through the air passage hole 522 of the guide member 520 to be introduced into the breeding space CB of the apparatus main body 100, or air of the breeding space CB may be introduced into the flow hole 251 and may then pass through the air passage hole 522 of the guide member 520, to be discharged to the air discharge source.

The elastic member 530 may be provided between the guide portion 252 and the guide member 520. As long as external force does not act on the movable opening and closing member 510, elastic force may be applied to the guide member 520 such that the movable opening and closing member 510 closes the flow hole 251.

A connection portion C provided in an air conditioner (not illustrated) including the air supply source and the air discharge source may be inserted into the flow hole 251 of the air flow unit 250.

The connection portion C, for example, may be partly in the form of a tube. In addition, the air conditioner may include one (1) connection portion C connected to the air supply source, and one (1) connection portion C connected to the air discharge source, and may include, for example, two (2) connection portions C.

Then, the one (1) connection portion C connected to the air supply source may be inserted into a flow hole 251 of one (1) air flow unit 250, among the two (2) air flow units 250, and the one (1) connection portion C connected to the air discharge source may be inserted into a flow hole 251 of the other air flow unit 250, among the two (2) air flow units 250.

When the connection portion C is inserted into the flow hole 251 of the air flow unit 250, as illustrated in FIG. 13, the connection portion C may push the guide member 520 of the valve unit 500. Therefore, the movable opening and closing member 510 may overcome the elastic force of the elastic member 530 to open the flow hole 251.

As above, fresh air from the air supply source of the air conditioner may pass through the connection portion C connected to the air supply source, and the air passage holes 522 and 252b of the guide member 520 and the guide portion 252, and may flow into the flow hole 251 of the air flow unit 250, to be introduced into the breeding space CB of the apparatus main body 100.

In addition, contaminated air present in the breeding space CB may flow into the flow hole 251 of the other air flow unit 250, and the air passage holes 252b and 522 of the guide portion 252 and the guide member 520, and may flow into the flow hole 251 of the air flow unit 250, and may flow to the air discharge source of the air conditioner connected to the connection portion C, through the connection portion C inserted into and connected to the flow hole 251 of the air flow unit 250.

In addition, a first magnetic force generating member 253 for generating magnetic force may be provided in the air flow unit 250. In addition, a second magnetic force generating member M corresponding to the first magnetic force generating member 253 may be provided in the connection portion C of the air conditioner located to correspond to the first magnetic force generating member 253.

Therefore, due to magnetic force of the first magnetic force generating member 253 and the second magnetic force generating member M, the flow hole 251 of the air flow unit 250 and the connection portion C of the air conditioner may be easily aligned. Then, the connection portion C of the air conditioner may be easily inserted into the flow hole 251 of the air flow unit 250.

In the above, the air flow unit 250 connected to the air supply source or the air discharge source has been described to be formed on the cover 200, as an example, but the air flow unit 250 connected to the air supply source or the air discharge source may be formed in the apparatus main body 100.

In addition, a water supply unit 400 may be formed in the cover 200. As illustrated in FIGS. 14 and 15, a water bottle WB may be inserted into the water supply unit 400. Therefore, water may be supplied to the laboratory animal in the breeding space CB of the apparatus main body 100.

A water supply hole 410 may be formed in the water supply unit 400. Then, as the water bottle WB is inserted into the water supply unit 400, a water injection nozzle N of the water bottle WB may be inserted into the water supply hole 410.

Therefore, the water injection nozzle N of the water bottle WB may be located inside the breeding space CB of the apparatus main body 100, such that water stored in the water bottle WB may supplied to the laboratory animal through the water injection nozzle N.

A rotation opening and closing member 420 may be rotatably provided in the water supply unit 400 adjacent to the water supply hole 410, for example, the water supply unit 400 on the breeding space CB.

To this end, a pair of rotation support portions 440 with a rotation support groove (not illustrated) having an open side portion may be formed in the water supply unit 400 adjacent to the water supply hole 410. In addition, a pair of shaft member passing holes 420a may be formed in the rotation opening and closing member 420.

Then, the rotation opening and closing member 420 may be rotatably provided to the water supply unit 400 adjacent to the water supply hole 410 by passing a shaft member 450 through the shaft member through hole 420a of the rotation opening and closing member 420, to be inserted into the rotation support groove of the rotation support portion 440.

A configuration in which the rotation opening and closing member 420 is rotatably provided is not particularly limited, and any of well-known configurations such as a rotation protrusion formed in the rotation opening and closing member 420 may be inserted into a rotation support groove formed in the rotation support portion 440 are possible.

An elastic member 430 in which elastic force exerts on the rotation opening and closing member 420 toward a side that closes the water supply hole 410, may be provided on a portion of the water supply unit 400 adjacent to the water supply hole 410.

Therefore, as illustrated in FIG. 15, the rotation opening and closing member 420 may open by the water injection nozzle N of the water bottle WB, only when the water bottle WB is inserted into the water supply unit 400.

When the water bottle WB is not inserted into the water supply unit 400, as illustrated in FIG. 14, the rotation opening and closing member 420 may be closed by the elastic force of the elastic member 430. Therefore, it is possible to prevent external air from flowing into the breeding space CB of the apparatus main body 100 through the water supply hole 410 of the water supply unit 400.

In addition, a gap sealing member R may be provided in a portion of the water bottle WB adjacent to the water injection nozzle N, as illustrated in FIG. 15. Therefore, when the water injection nozzle N is inserted into the water supply hole 410, a gap between the water injection nozzle N and the water supply hole 410 may be sealed. In addition, it is possible to prevent external air from flowing into the breeding space CB of the apparatus main body 100 through the gap between the water injection nozzle N and the water supply hole 410.

The present disclosure may further include a feeder 600.

The feeder 600 may be provided in the breeding space CB, to be spaced apart from a bottom surface of the apparatus main body 100 by a predetermined distance. Food for the laboratory animal may be placed in the feeder 600.

The feeder 600 may be provided below the opening 210 of the cover 200.

In addition, at least a portion of the feeder 600 may be formed to have a mesh shape. Therefore, the laboratory animal may eat the food contained in the feeder 600 through the mesh of the feeder 600.

In addition, a cross-section of the feeder 600 may be a square having a relatively wide upper portion and a relatively narrow lower portion. Therefore, the feeder 600 may be provided as a plurality of feeders, and the plurality of feeders 600 may be easily loaded for storage thereof. For example, one (1) feeder 600 may be inserted into the other feeder 600 to easily load the plurality of feeders 600.

An upper end of the feeder 600 may be installed in the opening 210 of the cover 200. To this end, a hanging portion 610 may be formed in an upper end portion of the feeder 600. Then, the hanging portion 610 of the feeder 600 may be hung on a hanging groove 210a formed in the opening 210 of the cover 200, described above.

When the feeder 600 having such a configuration is used, the filter unit 300 may be separated from the opening 210 of the cover 200 as illustrated in FIG. 4, and the feeder 600 may be then also easily separated from the opening 210.

Here, as described above, the feeder 600 may be separated from the opening 210 of the cover 200, such that the laboratory animal may be easily removed from the breeding space CB of the apparatus main body 100, the laboratory animal may be easily inserted into the breeding space CB, or the laboratory animal in the breeding space CB may be easily handled.

In other embodiment, as illustrated in FIG. 5, a horizontal extension portion 620 extending from an upper end portion of the feeder 600 may be provided in the feeder 600. In addition, as illustrated, a vertical extension portion 630 extending vertically from the horizontal extension portion 620 may be further provided in the feeder 600. As a result, the laboratory animal may not be allowed to enter the feeder 600, and the food contained in the feeder 600 may be eaten only through the mesh of the feeder 600.

As such, the upper end portion of the feeder 600 having the horizontal extension portion 620 and the vertical extension portion 630, and the horizontal extension portion 620 may be installed in the upper end portion of the apparatus main body 100. To this end, the hanging portion 610 may be formed in an upper end portion of the feeder 600 and the horizontal extension portion 620. In addition, the feeder 600 and the hanging portion 610 of the horizontal extension portion 620 may be hung over the hanging groove 210 formed in the upper end portion of the apparatus main body 100, described above.

In order to install the feeder 600 having the horizontal extension portion 620 and the vertical extension portion 630 in the upper end portion of the apparatus main body 100, as illustrated in FIG. 5, the cover 200 may be installed in the apparatus main body 100.

As described above, an apparatus for breeding a laboratory animal may be configured such that a filter 330 is replaced after an upper panel 320 rotates in an upward direction in a state in which a lower panel 310 is fixed to an opening 210 of an apparatus main body 100, to quickly and easily replace the filter 330 between the lower panel 310 and the upper panel 320, and to stably and reliably dispose and fix the filter 330, to have effects of preventing separation of the filter 330 and generation of a gap into which contaminated air may be introduced.

In addition, the present disclosure may be configured such that a temperature display sticker S is attached to an external surface of an apparatus main body 100, to have advantages, such that a user may use the temperature display sticker S to easily determine a temperature of a breeding space CB.

In addition, the present disclosure may be configured such that a clamping member 220 of a cover 200 is formed of a material changing color, depending on a temperature, to have advantages, such that a user may determine whether it has been sterilized at a proper sterilization temperature in a sterilization apparatus.

The present disclosure may have advantages that a laboratory animal may be easily inserted or removed, the apparatus for breeding a laboratory animal may be easily connected to an air conditioner, and the apparatus may be fastened to feeders having various shapes.

While example embodiments have been illustrated and described above, it will be apparent to those skilled in the art that modifications and variations could be made without departing from the scope of the present invention as defined by the appended claims.

## Claims

1. An apparatus for breeding a laboratory animal comprising:
an apparatus main body (100) in which a breeding space (CB) of the laboratory animal is provided;
a cover (200) having an opening (210) formed in one side of the cover (200), and covering an open upper portion of the apparatus main body (100); and
a filter unit (300) attachable to and detachable from the opening (210) of the cover (200), and suitable to purify air flowing into the breeding space (CB),
the filter unit (300) has:
a mesh-structured lower panel (310) rotatably provided in the opening (210);
a mesh-structured upper panel (320) rotatably provided on an upper portion of the lower panel (310); and
a filter (330) interposed between, and fixed to, the lower panel (310) and the upper panel (320), the upper portion of the lower panel (310) has a panel recess (310a) into which the upper panel (320) is inserted;
the upper panel (320) has one side portion rotatably fastened to one side portion of the panel recess (310a), and the other side portion latched by and fastened to the other side portion of the panel recess (310a), wherein
a gasket groove (3 lOe) is formed along an edge of a lower surface of the lower panel (310), wherein an elastic gasket (G) is inserted into the gasket groove (310e);
a gasket separation groove (310f) in communication with the gasket groove (310e) is formed on one side surface of the lower panel (310) to expose one side portion of the gasket groove (3 lOe);
an edge groove (211) into which the lower panel (310) is inserted is formed in an edge of the opening (210);
one side portion of the lower panel (310) is hinge-fastened to one side portion of the edge groove (211), and the other side portion of the lower panel (310) is latch-fastened to the other side portion of the edge groove (211);
a hinge protrusion is formed in the one side portion of the lower panel (310), wherein second hinge tongues (312) are formed on both side surfaces of the hinge protrusion;
an assembly groove in which the hinge protrusion is inserted is formed in the one side portion of the edge groove (211) of the opening (210), wherein second hinge grooves in which the second hinge tongues (312) are inserted are formed on both side surfaces of the assembly groove;
the second hinge tongues (312) protrude in a direction connecting the one side portion and the other side portion of the lower panel (310), to make the lower panel (310) attachable to and detachable from the opening (210), and
each of the second hinge grooves comprises:
a groove entrance portion (212a) open in an upward direction and formed in a longitudinal direction oriented vertically, to introduce the second hinge tongues (312) into a longitudinal arrangement; and
a groove extension portion (212b) connected to a lower portion of the groove entrance portion (212a) and further extending from the longitudinal arrangement to a transverse arrangement, as compared to the groove entrance portion (212a), to allow rotation of each of the second hinge tongues (312).

2. The apparatus according to claim 1, wherein a first pressing member (321), which is elastically deformable, is formed in the other side portion of the upper panel (320), wherein a first latching protrusion line (321a) is formed in the first pressing member (321), and
a first operating groove (310b), open in an upward direction, is formed on the other side surface of the panel recess (310a) of the lower panel (310), wherein a first latching groove line (310c) by which the first latching protrusion line (321a) is inserted and latched is formed below the first operating groove (310b).

3. The apparatus according to claim 1, wherein a first hinge tongue (420) is formed on one side surface of the upper panel (320),
wherein a first hinge groove (310d) into which the first hinge tongue (420) is inserted is formed on one side surface of the panel recess (310a) of the lower panel (310), wherein the first hinge groove (310d) is configured such that a diameter of the first hinge groove (3 lOd) is longer than a diameter of a longitudinal cross-section of the first hinge tongue (420), to form a concave shape.

4. The apparatus according to claim 1, wherein a second pressing member (311), which is elastically deformable, is formed in the other side portion of the lower panel (310), and a second latching protrusion line (311a) is formed in the second pressing member (311), and
a second operating groove, open in an upward direction, is formed on the other side portion of the edge groove (211) of the opening (210), wherein a second latching groove line by which the second latching protrusion line (311a) is inserted and latched is formed in a lower portion of the second operating groove.

5. The apparatus according to claim 1, wherein each of the second hinge tongues (312) is formed to have a tapered structure in a direction protruding from the both side surfaces of the hinge protrusion.

6. The apparatus according to claim 1, wherein a temperature display sticker (S) is attached to an external surface of the apparatus main body (100).

7. The apparatus according to claim 1, wherein a clamping member (220) to be rotated is mounted on the cover (200), and a latching jaw (101) latching the clamping member (220) is formed on the apparatus main body (100),
wherein the clamping member (220) is formed of a material changing color, depending on a temperature.

8. The apparatus according to claim 1, wherein an air flow unit (250) connectable to an air supply source for supplying fresh air to the breeding space (CB) or to an air discharge source for discharging contaminated air present in the breeding space (CB) externally is formed in the cover (200).

9. The apparatus according to claim 11, wherein a flow hole (251) is formed in the air flow unit (250), wherein a valve unit (500) opening and closing the flow hole (251) is installed in the flow hole (251),
wherein the valve unit (500) has a movable opening and closing member (510) movably provided in the flow hole (251) and opening and closing the flow hole (251),
wherein the movable opening and closing member (510) comprises a conical opening and closing portion (511) opening and closing the flow hole (251), and a moving portion (512) movably provided in the flow hole (251).

10. The apparatus according to claim 11, wherein a guide portion (252) in which a guide hole (252a) into which the movable opening and closing member (510) is inserted, to guide a movement of the movable opening and closing member (510), and in which an air passage hole (252b) through which air passes, is provided in the flow hole (251), and
the valve unit (500) further comprises:
a guide member (520) having an assembly hole (521) in which one end portion of the movable opening and closing member (510) is assembled, and an air passage hole (252b) through which air passes; and
an elastic member (530) provided between the guide portion (252) and the guide member (520).

11. The apparatus according to claim 11, wherein a connection portion (C) provided in an air conditioner including the air supply source and the air discharge source is insertable into the flow hole (251), and
a first magnetic force generating member (253) generating magnetic force is provided in the air flow unit (250),
wherein a second magnetic force generating member (M) corresponding to the first magnetic force generating member (253) is provided in the connection portion (C) located to correspond to the first magnetic force generating member (253).

12. The apparatus according to claim 1, further comprising a mesh-structured feeder (600) located in the breeding space (CB) and below the opening (210), disposed to be spaced apart from a bottom surface of the apparatus main body (100) by a predetermined distance, and placing food for the laboratory animal,
wherein an upper end portion of the feeder (600) is mounted on and latched by an upper end portion of the apparatus main body (100) or an edge of the opening (210).

## Patentansprüche

1. Vorrichtung zum Züchten eines Versuchstiers, aufweisend:
einen Vorrichtungs-Hauptkörper (100), in dem ein Aufzuchtraum (CB) des Versuchstiers bereitgestellt ist;
eine Abdeckung (200) mit einer Öffnung (210), die in einer Seite der Abdeckung (200) ausgebildet ist und einen offenen oberen Abschnitt des Vorrichtungs-Hauptkörpers (100) abdeckt; und
eine Filtereinheit (300), die an der Öffnung (210) der Abdeckung (200) anbringbar und von dieser abnehmbar ist und geeignet ist, die in den Aufzuchtraum (CB) strömende Luft zu reinigen,
wobei die Filtereinheit (300) hat:
eine gitterstrukturierte untere Platte (310), die drehbar in der Öffnung (210) bereitgestellt ist;
eine gitterstrukturierte obere Platte (320), die drehbar auf einem oberen Abschnitt der unteren Platte (310) bereitgestellt ist; und
einen Filter (330), der zwischen der unteren Platte (310) und der oberen Platte (320) angeordnet und daran fixiert ist, wobei der obere Abschnitt der unteren Platte (310) eine Plattenausnehmung (310a) hat, in die die obere Platte (320) eingesetzt ist;
wobei die obere Platte (320) einen seitlichen Abschnitt hat, der drehbar an einem seitlichen Abschnitt der Plattenausnehmung (310a) befestigt ist, und der andere seitliche Abschnitt durch den anderen seitlichen Abschnitt der Plattenausnehmung (310a) verriegelt und daran befestigt ist,
wobei eine Dichtungsnut (310e) entlang einer Kante einer Unterseite der unteren Platte (310) ausgebildet ist, wobei eine elastische Dichtung (G) in die Dichtungsnut (310e) eingesetzt ist;
wobei eine Dichtungstrennnut (310f) in Kommunikation mit der Dichtungsnut (310e) auf einer Seitenfläche der unteren Platte (310) ausgebildet ist, um einen seitlichen Abschnitt der Dichtungsnut (310e) freizulegen;
wobei eine Kantennut (211), in die die untere Platte (310) eingesetzt ist, in einer Kante der Öffnung (210) ausgebildet ist;
wobei ein seitlicher Abschnitt der unteren Platte (310) mit einem Scharnier an einem seitlichen Abschnitt der Kantennut (211) befestigt ist, und der andere seitliche Abschnitt der unteren Platte (310) mit einem Riegel an dem anderen seitlichen Abschnitt der Kantennut (211) befestigt ist;
wobei ein Scharniervorsprung in dem einen Seitenabschnitt der unteren Platte (310) ausgebildet ist, wobei zweite Scharnierzungen (312) an beiden Seitenflächen des Scharniervorsprungs ausgebildet sind;
wobei eine Montagenut, in die der Scharniervorsprung eingesetzt ist, in dem einen seitlichen Abschnitt der Kantennut (211) der Öffnung (210) ausgebildet ist, wobei zweite Scharniernuten, in die die zweiten Scharnierzungen (312) eingesetzt sind, an beiden Seitenflächen der Montagenut ausgebildet sind;
wobei die zweiten Scharnierzungen (312) in einer Richtung vorstehen, die den einen seitlichen Abschnitt und den anderen seitlichen Abschnitt der unteren Platte (310) verbindet, um die untere Platte (310) an der Öffnung (210) anbringbar und von ihr abnehmbar zu machen, und
wobei jede der zweiten Scharniernuten aufweist:
einen Nuteingangsabschnitt (212a), der nach oben offen ist und in einer vertikal ausgerichteten Längsrichtung gebildet ist, um die zweiten Scharnierzungen (312) in eine Längsanordnung einzuführen; und
einen Nutverlängerungsabschnitt (212b), der mit einem unteren Abschnitt des Nuteingangsabschnitts (212a) verbunden ist und sich weiter von der Längsanordnung zu einer Queranordnung im Vergleich zu dem Nuteingangsabschnitt (212a) erstreckt, um eine Drehung jeder der zweiten Scharnierzungen (312) zu ermöglichen.

2. Vorrichtung nach Anspruch 1, wobei ein erstes Druckstück (321), das elastisch verformbar ist, in dem anderen seitlichen Abschnitt der oberen Platte (320) ausgebildet ist, wobei eine erste Verriegelungsvorsprungslinie (321a) in dem ersten Druckstück (321) ausgebildet ist, und
wobei eine erste Betriebsnut (310b), die nach oben offen ist, auf der anderen Seitenfläche der Plattenausnehmung (310a) der unteren Platte (310) ausgebildet ist, wobei eine erste Verriegelungsnutlinie (310c), durch die die erste Verriegelungsvorsprungslinie (321a) eingeführt und verriegelt ist, unterhalb der ersten Betriebsnut (310b) ausgebildet ist.

3. Vorrichtung nach Anspruch 1, wobei eine erste Scharnierzunge (420) an einer Seitenfläche der oberen Platte (320) ausgebildet ist,
wobei eine erste Scharniernut (310d), in die die erste Scharnierzunge (420) eingeführt ist, auf einer Seitenfläche der Plattenausnehmung (310a) der unteren Platte (310) ausgebildet ist,
wobei die erste Scharniernut (310d) derart ausgebildet ist, dass ein Durchmesser der ersten Scharniernut (310d) länger ist als ein Durchmesser eines Längsquerschnitts der ersten Scharnierzunge (420), um eine konkave Form auszubilden.

4. Vorrichtung nach Anspruch 1, wobei ein zweites Druckstück (311), das elastisch verformbar ist, in dem anderen seitlichen Abschnitt der unteren Platte (310) ausgebildet ist, und eine zweite Verriegelungsvorsprungslinie (311a) in dem zweiten Druckstück (311) ausgebildet ist, und
wobei eine zweite Betriebsnut, die nach oben offen ist, auf dem anderen seitlichen Abschnitt der Kantennut (211) der Öffnung (210) ausgebildet ist, wobei eine zweite Verriegelungsnutlinie, durch die die zweite Verriegelungsvorsprungslinie (311a) eingeführt und verriegelt ist, in einem unteren Abschnitt der zweiten Betriebsnut ausgebildet ist.

5. Vorrichtung nach Anspruch 1, wobei jede der zweiten Scharnierzungen (312) so ausgebildet ist, dass sie eine sich verjüngende Struktur in einer Richtung aufweist, die von den beiden Seitenflächen des Scharniervorsprungs vorsteht.

6. Vorrichtung nach Anspruch 1, wobei ein Temperaturanzeige-Aufkleber (S) an einer äußeren Fläche des Vorrichtungs-Hauptkörpers (100) angebracht ist.

7. Vorrichtung nach Anspruch 1, wobei an der Abdeckung (200) ein zu drehendes Klemmelement (220) angebracht ist und an dem Vorrichtungs-Hauptkörper (100) eine das Klemmelement (220) verriegelnde Rastbacke (101) ausgebildet ist,
wobei das Klemmelement (220) aus einem Material gebildet ist, das seine Farbe in Abhängigkeit von einer Temperatur ändert.

8. Vorrichtung nach Anspruch 1, wobei in der Abdeckung (200) eine Luftstromeinheit (250) ausgebildet ist, die an eine Luftzufuhrquelle zur Zufuhr von Frischluft in den Aufzuchtraum (CB) oder an eine Luftabgabequelle zur Ableitung von im Aufzuchtraum (CB) vorhandener kontaminierter Luft nach außen anschließbar ist.

9. Vorrichtung nach Anspruch 11, wobei in der Luftstromeinheit (250) ein Durchflussloch (251) ausgebildet ist, wobei eine Ventileinheit (500), die das Durchflussloch (251) öffnet und schließt, in dem Durchflussloch (251) installiert ist,
wobei die Ventileinheit (500) ein bewegliches Öffnungs- und Schließelement (510) hat, das beweglich in dem Durchflussloch (251) bereitgestellt ist und das Durchflussloch (251) öffnet und schließt,
wobei das bewegliche Öffnungs- und Schließelement (510) einen konischen Öffnungs- und Schließabschnitt (511), der das Durchflussloch (251) öffnet und schließt, und einen beweglichen Abschnitt (512), der beweglich in dem Durchflussloch (251) bereitgestellt ist, aufweist.

10. Vorrichtung nach Anspruch 11, wobei ein Führungsabschnitt (252), in dem ein Führungsloch (252a), in das das bewegliche Öffnungs- und Schließelement (510) eingesetzt ist, um eine Bewegung des beweglichen Öffnungs- und Schließelements (510) zu führen, und in dem ein Luftdurchgangsloch (252b), durch das Luft hindurchgeht, in dem Durchflussloch (251) bereitgestellt ist, und die Ventileinheit (500) ferner aufweist:
ein Führungselement (520) mit einem Montageloch (521), in dem ein Endabschnitt des beweglichen Öffnungs- und Schließelements (510) montiert wird, und einem Luftdurchgangsloch (252b), durch das Luft strömt; und
ein elastisches Element (530), das zwischen dem Führungsabschnitt (252) und dem Führungselement (520) bereitgestellt wird.

11. Vorrichtung nach Anspruch 11, wobei ein Verbindungsabschnitt (C), der in einem Klimagerät, das die Luftzufuhrquelle und die Luftabgabequelle aufweist, in das Durchflussloch (251) einführbar ist, und
ein erstes magnetkrafterzeugendes Element (253), das eine Magnetkraft erzeugt, in der Luftstromeinheit (250) bereitgestellt ist,
wobei ein zweites magnetkrafterzeugendes Element (M), das dem ersten magnetkrafterzeugenden Element (253) entspricht, in dem Verbindungsabschnitt (C) bereitgestellt ist, der so angeordnet ist, dass er dem ersten magnetkrafterzeugenden Element (253) entspricht.

12. Vorrichtung nach Anspruch 1, ferner aufweisend einen gitterstrukturierten Futterspender (600), der in dem Aufzuchtraum (CB) und unterhalb der Öffnung (210), derart angeordnet ist, dass er von einer Bodenfläche des Vorrichtungs-Hauptkörpers (100) um einen vorbestimmten Abstand beabstandet ist, und die Nahrung für das Versuchstier platziert,
wobei ein oberer Endabschnitt des Futterspenders (600) an einem oberen Endabschnitt des Vorrichtungs-Hauptkörpers (100) oder einer Kante der Öffnung (210) angebracht ist und von diesem verriegelt wird.

## Revendications

1. Appareil pour l'élevage d'un animal de laboratoire comprenant :
un corps principal d'appareil (100) dans lequel un espace d'élevage (CB) de l'animal de laboratoire est prévu ;
un couvercle (200) disposant d'une ouverture (210) formée sur un côté du couvercle (200), et recouvrant une partie supérieure ouverte du corps principal d'appareil (100) ; et
une unité de filtrage (300) pouvant être attachée à l'ouverture (210) du couvercle (200) et détachée de celle-ci, et adaptée pour purifier l'air s'écoulant dans l'espace d'élevage (CB),
l'unité de filtrage (300) présente :
un panneau inférieur (310) à structure maillée prévu de manière rotative dans l'ouverture (210) ;
un panneau supérieur (320) à structure maillée prévu de manière rotative sur une partie supérieure du panneau inférieur (310) ; et
un filtre (330) interposé entre le panneau inférieur (310) et le panneau supérieur (320) et fixé à ceux-ci, la partie supérieure du panneau inférieur (310) dispose d'un renfoncement de panneau (310a) dans lequel le panneau supérieur (320) est inséré ;
le panneau supérieur (320) présente une partie latérale fixée de manière rotative à une partie latérale du renfoncement de panneau (310a), et l'autre partie latérale verrouillée par l'autre partie latérale du renfoncement de panneau (310a) et fixée à celle-ci,
dans lequel une rainure de joint (310e) est formée le long d'un bord d'une surface inférieure du panneau inférieur (310), un joint élastique (G) étant inséré dans la rainure de joint (310e) ;
une rainure de séparation de joint (310f) en communication avec la rainure de joint (310e) est formée sur une surface latérale du panneau inférieur (310) pour exposer une partie latérale de la rainure de joint (310e) ;
une rainure de bord (211) dans laquelle le panneau inférieur (310) est inséré est formée dans un bord de l'ouverture (210) ;
une partie latérale du panneau inférieur (310) est fixée par charnière à une partie latérale de la rainure de bord (211), et l'autre partie latérale du panneau inférieur (310) est fixée par verrou à l'autre partie latérale de la rainure de bord (211) ;
une saillie de charnière est formée dans la une partie latérale du panneau inférieur (310), dans lequel de secondes languettes de charnières (312) sont formées sur les deux surfaces latérales de la saillie de charnière ;
une rainure d'assemblage dans laquelle la saillie de charnière est insérée est formée dans la une partie latérale de la rainure de bord (211) de l'ouverture (210), dans lequel de secondes rainures de charnière dans lesquelles les secondes languettes de charnière (312) sont insérées sont formées sur les deux surfaces latérales de la rainure d'assemblage ;
les secondes languettes de charnière (312) font saillie dans une direction reliant la une partie latérale et l'autre partie latérale du panneau inférieur (310), pour que le panneau inférieur (310) puisse être attaché à l'ouverture (210) et détaché de celle-ci, et
chacune des secondes rainures de charnière comprend :
une partie d'entrée de rainure (212a) ouverte dans une direction vers le haut et formée dans une direction longitudinale orientée verticalement, pour introduire les secondes languettes de charnière (312) dans un agencement longitudinal ; et
une partie d'extension de rainure (212b) reliée à une partie inférieure de la partie d'entrée de rainure (212a) et s'étendant en outre depuis l'agencement longitudinal vers un agencement transversal, par rapport à la partie d'entrée de rainure (212a), pour permettre une rotation de chacune des secondes languettes de charnière (312).

2. Appareil selon la revendication 1, dans lequel un premier élément de pression (321), qui est déformable élastiquement, est formé dans l'autre partie latérale du panneau supérieur (320), dans lequel une première ligne de saillie de verrouillage (321a) est formée dans le premier élément de pression (321), et
une première rainure d'actionnement (310b), ouverte dans une direction vers le haut, est formée sur l'autre surface latérale du renfoncement de panneau (310a) du panneau inférieur (310), dans lequel une première ligne de rainure de verrouillage (310c) par laquelle la première ligne de saillie de verrouillage (321a) est insérée et verrouillée est formée sous la première rainure d'actionnement (310b).

3. Appareil selon la revendication 1, dans lequel une première languette de charnière (420) est formée sur une surface latérale du panneau supérieur (320),
dans lequel une première rainure de charnière (310d) dans laquelle la première languette de charnière (420) est insérée est formée sur une surface latérale du renfoncement de panneau (310a) du panneau inférieur (310),
dans lequel la première rainure de charnière (310d) est configurée de telle sorte qu'un diamètre de la première rainure de charnière (310d) soit plus long qu'un diamètre d'une section transversale longitudinale de la première languette de charnière (420), pour former une forme concave.

4. Appareil selon la revendication 1, dans lequel un second élément de pression (311), qui est déformable élastiquement, est formé dans l'autre partie latérale du panneau inférieur (310), et une seconde ligne de saillie de verrouillage (311a) est formée dans le second élément de pression (311), et
une seconde rainure d'actionnement, ouverte dans une direction vers le haut, est formée sur l'autre partie latérale de la rainure de bord (211) de l'ouverture (210), dans lequel une seconde ligne de rainure de verrouillage par laquelle la seconde ligne de saillie de verrouillage (311a) est insérée et verrouillée est formée dans une partie inférieure de la seconde rainure d'actionnement.

5. Appareil selon la revendication 1, dans lequel chacune des secondes languettes de charnière (312) est formée pour avoir une structure conique dans une direction faisant saillie depuis les deux surfaces latérales de la saillie de charnière.

6. Appareil selon la revendication 1, dans lequel un autocollant d'affichage de température (S) est fixé à une surface externe du corps principal d'appareil (100).

7. Appareil selon la revendication 1, dans lequel un élément de serrage (220) à tourner est monté sur le couvercle (200), et une mâchoire de verrouillage (101) verrouillant l'élément de serrage (220) est formée sur le corps principal d'appareil (100),
dans lequel l'élément de serrage (220) est formé d'un matériau changeant de couleur, en fonction d'une température.

8. Appareil selon la revendication 1, dans lequel une unité d'écoulement d'air (250) pouvant être reliée à une source d'alimentation en air pour fournir de l'air frais à l'espace d'élevage (CB) ou à une source d'évacuation d'air pour évacuer de l'air contaminé présent dans l'espace d'élevage (CB) à l'extérieur est formée dans le couvercle (200).

9. Appareil selon la revendication 11, dans lequel un trou d'écoulement (251) est formé dans l'unité d'écoulement d'air (250), dans lequel une unité de vanne (500) ouvrant et fermant le trou d'écoulement (251) est installée dans le trou d'écoulement (251),
dans lequel l'unité de vanne (500) dispose d'un élément d'ouverture et de fermeture mobile (510) prévu de manière mobile dans le trou d'écoulement (251) et ouvrant et fermant le trou d'écoulement (251),
dans lequel l'élément d'ouverture et de fermeture mobile (510) comprend une partie d'ouverture et de fermeture conique (511) ouvrant et fermant le trou d'écoulement (251), et une partie mobile (512) prévue de manière mobile dans le trou d'écoulement (251).

10. Appareil selon la revendication 11, dans lequel une partie de guidage (252) dans laquelle un trou de guidage (252a) dans lequel l'élément d'ouverture et de fermeture mobile (510) est inséré, pour guider un mouvement de l'élément d'ouverture et de fermeture mobile (510), et dans lequel un trou de passage d'air (252b) à travers lequel de l'air passe, est prévu dans le trou d'écoulement (251), et
l'unité de vanne (500) comprend en outre :
un élément de guidage (520) comportant un trou d'assemblage (521) dans lequel une partie d'extrémité de l'élément d'ouverture et de fermeture mobile (510) est assemblée, et un trou de passage d'air (252b) à travers lequel de l'air passe ; et
un élément élastique (530) prévu entre la partie de guidage (252) et l'élément de guidage (520).

11. Appareil selon la revendication 11, dans lequel une partie de liaison (C) prévue dans un climatiseur comprenant la source d'alimentation en air et la source d'évacuation d'air peut être insérée dans le trou d'écoulement (251), et
un premier élément de génération de force magnétique (253) générant une force magnétique est prévu dans l'unité d'écoulement d'air (250),
dans lequel un second élément de génération de force magnétique (M) correspondant au premier élément de génération de force magnétique (253) est prévu dans la partie de liaison (C) placée pour correspondre au premier élément de génération de force magnétique (253).

12. Appareil selon la revendication 1, comprenant en outre un dispositif d'alimentation (600) à maille structurée situé dans l'espace d'élevage (CB) et sous l'ouverture (210), disposé pour être espacé d'une surface inférieure du corps principal d'appareil d'une distance prédéterminée et pour y placer de la nourriture pour l'animal de laboratoire,
dans lequel une partie d'extrémité supérieure du dispositif d'alimentation (600) est montée sur et verrouillée par une partie d'extrémité supérieure du corps principal d'appareil (100) ou un bord de l'ouverture (210).
